# EUROPÄISCHE PATENTSCHRIFT

(11) **EP 3 209 448 B1**
(45) Veröffentlichungstag und Bekanntmachung des Hinweises auf die Patenterteilung: **15.09.2021**
(21) Anmeldenummer: 15807789.1
(22) Anmeldetag: 20.10.2015
(51) Int. Cl.: B23G 3/00, B21D 28/12, B21H 3/08, B26F 1/14

(54) **BEARBEITUNGSANLAGE MIT EINER VORRICHTUNG ZUR AUSBILDUNG EINES GEWINDES IN EINEM WERKSTÜCK**
MACHINE WITH A DEVICE FOR POSITIONING A THREAD IN A WORKPIECE
MACHINE AVEC UN DISPOSITIF DE FAÇONNAGE D'UN FILET DANS UNE PIÈCE

(30) Priorität: 21.10.2014 DE 102014015439; 30.04.2015 DE 102015005486
(43) Veröffentlichungstag der Anmeldung: 30.08.2017
(73) Patentinhaber: Ehrt Maschinenbau GmbH, 53619 Rheinbreitbach (DE)
(72) Erfinder: WINTERS, Andreas, 53619 Rheinbreitbach (DE)
(74) Vertreter: Sattler de Sousa e Brito, Clara
(86) Internationale Anmeldenummer: PCT/EP2015/002077
(87) Internationale Veröffentlichungsnummer: WO 2016/062399

(56) Entgegenhaltungen:
- EP-A1- 2 311 592
- DE-A1- 3 018 445
- DE-A1- 4 445 363
- DE-A1-102007 038 462
- JP-A- 2010 017 797
- JP-U- S61 122 031
- US-A- 3 200 426

## Beschreibung

Die Erfindung betrifft eine Bearbeitungsanlage mit einer Vorrichtung zur Ausbildung eines Gewindes in einem Werkstück gemäß dem Oberbegriff des Anspruchs 1, wobei die Vorrichtung ein Gehäuse und mehrere innerhalb des Gehäuses drehbar und verschiebbar gelagerte Werkzeugaufnahmen für jeweils ein Gewindeausbildewerkzeug umfasst. Eine solche Bearbeitungsanlage ist aus der JP S61-122031 U bekannt.

Derartige Vorrichtungen dienen dazu, automatisiert Gewinde in Werkstücke einzubringen. Dabei können die Gewinde zum einen geschnitten, d.h. spanend eingebracht werden. Eine andere Art der Gewindeausbildung ist das Gewindeformen, bei dem das Gewinde durch Kaltverformung in das Material des Werkstücks gedrückt wird. Ein Gewindeformen ist beispielsweise im Rahmen einer Blechbearbeitung vorteilhaft, weil dabei ein Anfall von Spänen vermieden werden kann.

Bei einer Bearbeitung von vielen, insbesondere großen Blechen müssen eine Vielzahl von Ausstanzungen und Gewindeöffnungen, häufig mit variierenden Dimensionen und Formen, hergestellt werden. Dies bedingt eine entsprechend hohe Anzahl an unterschiedlichen Stanz- und Gewindeausbildewerkzeugen, die in kurzer Taktfolge nacheinander zum Einsatz kommen. Um solche Blechbearbeitungen wirtschaftlich durchführen zu können, wurden Bearbeitungsanlagen entwickelt, in denen mehrere Werkzeugeinheiten bereitgestellt sind, die mit unterschiedlich geformten und/oder dimensionierten Stanz- oder Gewindeausbildewerkzeugen bestückt werden können und bedarfsweise zum Bearbeiten der Bleche an dafür definierten Stellen zum Einsatz kommen. Ein Umrüsten der Bearbeitungsanlagen für die Bearbeitung eines Blechs kann dadurch vermieden oder zumindest verringert werden.

Bekannt sind weiterhin Werkzeugeinheiten, die mehrere (unterschiedliche) Gewindeausbildewerkzeuge integrieren und mit einer Antriebseinheit kombiniert werden, durch die die Linear- und/oder Rotationsbewegungen von jeweils einem ausgewählten der Gewindeausbildewerkzeuge bewirkt werden. Vorteilhaft an solchen Werkzeugeinheiten ist die Betätigung der unterschiedlichen Gewindeausbildewerkzeuge mittels lediglich einer gemeinsamen Antriebsvorrichtung.

Die US 3,200,426 offenbart eine Gewindeschneidevorrichtung mit einem Gehäuse, das ein Gehäuseoberteil und ein Gehäuseunterteil umfasst, wobei das verschiebbar innerhalb des Gehäuseoberteils gelagerte Gehäuseunterteil mittels eines in das Gehäuse integrierten pneumatischen Antriebs linear verschoben werden kann. In das Gehäuseunterteil sind weiterhin mehrere Werkzeugaufnahmen drehbar integriert, wobei diese über ein Zahnradgetriebe gemeinsam von einer zentralen Antriebswelle rotierend antreibbar sind. Die zentrale Antriebswelle ist Teil eines in das Gehäuseoberteil integrierten, hydraulischen Drehantriebs.

Die DE 30 18 445 A1 beschreibt eine Gewindeschneidevorrichtung mit einem Rahmen bzw. Gehäuse, innerhalb dessen eine Arbeitsspindel drehbar und axial verschiebbar gelagert ist. Die Arbeitsspindel umfasst eine Werkzeugaufnahme. Ein rotierender Antrieb der Arbeitsspindel erfolgt mittels eines pneumatischen oder hydraulischen Zylinders, wobei ein Hub eines Kolbens des Zylinders mittels einer Gewindehülse und einer Abnahmerollen umfassenden Antriebswelle in eine Drehbewegung der Antriebswelle übersetzt wird. Über ein Zahnradgetriebe wird die Rotation der Antriebswelle in eine Rotation der Arbeitsspindel übersetzt. Die Rotation der Arbeitsspindel bewirkt aufgrund eines Zusammenwirkens einer Leitmutter mit einer Pinole einen Axialhub der Arbeitsspindel.

Die DE 10 2007 038 462 A1 offenbart ein modulartiges Spindelaggregat, das in einem Gehäuse eine drehbare und axial verschiebbare Antriebsspindel mit einer Werkzeugaufnahme für beispielsweise einen Bohrer oder Fräser integriert. Ein rotierender Antrieb der Antriebsspindel erfolgt mittels eines elektrischen Antriebsmotors und ein Linearhub der Antriebsspindel, gemeinsam mit dem Antriebsmotor, kann mittels einer Axialstellvorrichtung, die als Pneumatikzylinder ausgebildet sein kann, bewirkt werden. Mehrere solcher Spindelaggregate können in einem Mehrfachspindel-Bearbeitungskopf kombiniert werden.

Die DE 44 45 363 A1 beschreibt eine Blechbearbeitungsmaschine mit einer Mehrfachwerkzeugbaugruppe, bei dem die mehreren Werkzeugaufnahmen, die Gewindeschneider aufnehmen können, mittels einer Hülse gemeinsam rotierend angetrieben werden, wozu die Hülse ein Innengewinde aufweist, das jeweils mit einem Zahnrad einer Hülse jeder der Werkzeugaufnahmen kämmt. Der für das Gewindeschneiden erforderliche Axialhub der Werkzeugaufnahmen wird mittels eines Hammers bewirkt, der über einen Stempel auf ein oberes Ende eines drehfest und axial verschiebbar in der Hülse gelagerten Stabs wirkt, wobei dieser Stab an seinem unteren Ende den Gewindeschneider tragen kann.

Die EP 2 311 592 A1 offenbart eine Gewindeschneidevorrichtung mit einer Mehrzahl von Werkzeugaufnahmevorrichtungen, bei der eine ausgewählte Werkzeugaufnahmevorrichtung zunächst mittels eines Stempels benachbart zu dem zu bearbeitenden Werkstück positioniert wird, wobei unterschiedliche Gehäusekomponenten der Werkzeugaufnahmevorrichtung unter Komprimierung von Federelementen relativ zueinander verschoben werden. Das Gewindeschneiden erfolgt dann durch einen rotierenden Antrieb einer an ihrem unteren Ende das Werkzeug tragenden Spindel, wobei über ein Gewindegetriebe die Rotation auch in einen Axialhub übersetzt wird.

Die JP 2010/017797 A offenbart eine Vorrichtung zur Ausbildung eines Gewindes in einem Werkstück mit einem Gehäuse und mehreren in dem Gehäuse drehbar und verschiebbar gelagerten Werkzeugaufnahmen für jeweils ein Gewindeausbildewerkzeug. Weiterhin sind jeweils ein pneumatischer Linearantrieb für jede der Werkzeugaufnahmen sowie ein Rotationsantrieb für die Werkzeugaufnahmen vorgesehen. Davon sind jedoch lediglich die Linearantriebe in das Gehäuse integriert, während eine Rotation der Werkzeugaufnahmen mittels eines externen Antriebsmotors bewirkt wird, der über einen Zahnriemen auf ein hülsenförmiges Zahnriemenrad wirkt, das drehfest einem Bauteil des Gehäuses zusammenwirkt. Eine Rotation dieses Gehäusebauteils wird dann über eine Verzahnung auf die Werkzeugaufnahmen übertragen, wobei auf diese Weise lediglich diejenige Werkzeugaufnahme rotierend angetrieben wird, die mittels des dazugehörigen Linearantriebs in Richtung des Werkstücks ausgefahren ist.

Die JP S61-122031 U offenbart eine Vorrichtung zur Ausbildung eines Gewindes in einem Werkstück mit einem Gehäuse und mehreren in dem Gehäuse drehbar und verschiebbar gelagerten Werkzeugaufnahmen für jeweils ein Gewindeausbildewerkzeug, wobei ein externer Rotationsantrieb für die Werkzeugaufnahmen vorgesehen ist, der über ein zentrales Abtriebsrad jeweils ein Antriebsrad der Werkzeugaufnahmen antreibt. Der Rotationsantrieb ist dabei in eine Bearbeitungsanlage integriert, die auch die Vorrichtung aufnimmt, und wirkt über ein Zugmittel oder ein Getrieberad auf eine zentrale Welle der Vorrichtung. Ein linearer Arbeitshub für die Werkzeugaufnahmen kann dadurch realisiert werden, dass ein Innengewinde der Werkzeugaufnahmen jeweils in ein Außengewinde einer Kolbenstange eines Fluidzylinders eingreift, so dass eine mittels des Rotationsantriebs bewirkte Rotation der Werkzeugaufnahmen auch zu einer axialen Bewegung der Werkzeugaufnahmen führt. Bei der Vorrichtung kann gewählt werden, welche der Werkzeugaufnahmen für ein Ausbilden eines Gewindes genutzt wird, indem die den einzelnen Werkzeugaufnahmen zugeordneten Fluidzylinder unterschiedlich weit ausgefahren werden.

Ausgehend von diesem Stand der Technik lag der Erfindung die Aufgabe zugrunde, eine Möglichkeit anzugeben, ein Ausbilden von Gewinden in einem Werkstück, insbesondere im Rahmen einer auch anderen Bearbeitung (insbesondere Stanzbearbeitung) des Werkstücks, weiter zu verbessern.

Diese Aufgabe wird durch eine Bearbeitungsanlage gemäß dem Patentanspruch 1 gelöst. Vorteilhafte Ausführungsformen der erfindungsgemäßen Bearbeitungsanlage sind Gegenstände der abhängigen Patentansprüche und ergeben sich aus der nachfolgenden Beschreibung der Erfindung.

Der Erfindung liegt der Gedanke zu Grunde, eine Vorrichtung zur Ausbildung eines Gewindes in einem Werkstück, die mehrere Werkzeugaufnahmen zur möglichen Halterungen von unterschiedlichen Gewindeausbildewerkzeugen aufweist, als möglichst autarke Einheit auszubilden, die zudem möglichst einfach in eine Bearbeitungsanlage für das Werkstück integrierbar ist. Dadurch wird eine möglichst flexible Anpassung der Bearbeitungsanlage an unterschiedlich dimensionierte, in dem Werkstück auszubildende Gewinde ermöglicht.

Demnach ist eine solche Vorrichtung zur Ausbildung eines Gewindes in einem Werkstück, die zumindest ein (ein- oder mehrteiliges) Gehäuse und mehrere in oder an dem Gehäuse drehbar und verschiebbar gelagerte Werkzeugaufnahmen für (jeweils) ein Gewindeausbildewerkzeug aufweist, zum einen dadurch gekennzeichnet, dass jeweils ein Linearantrieb für jede der Werkzeugaufnahmen und ein Rotationsantrieb für die Werkzeugaufnahmen in das Gehäuse integriert sind. Weiterhin ist vorgesehen, dass der Rotationsantrieb über ein zentrales Abtriebsrad jeweils ein Antriebsrad für die Werkzeugaufnahmen antreibt.

Durch die Integration der mehreren Werkzeugaufnahmen und der für diese vorgesehenen Antriebe in eine zusammenhängende Einheit wird die erfindungsgemäß angestrebte einfache Integrierbarkeit und damit Auswechselbarkeit der Vorrichtung erreicht, da ein Anschließen oder Lösen der Vorrichtung an einen oder von einem externen Antrieb bei der De-/Montage entfallen kann.

Die "Integration" des/der Linearantriebs/-e und des Rotationsantriebs in das Gehäuse sieht vor, dass von den Antrieben erzeugte Kräfte an dem Gehäuse abgestützt werden. Die "Integration" setzt jedoch nicht voraus, dass die Antriebe (vollständig) innerhalb des Gehäuses angeordnet sein müssen, auch wenn eine solche Ausgestaltung bevorzugt vorgesehen ist.

Eine erfindungsgemäße Bearbeitungsanlage umfasst neben einer solchen Vorrichtung zur Ausbildung eines Gewindes in einem Werkstück zumindest noch eine zur Aufnahme der Vorrichtung ausgebildete Aufnahmevorrichtung. Vorzugsweise vorgesehen ist noch ein mittels eines Antriebs bewegbarer Stempel. Der Stempel kann insbesondere dazu dienen, die Vorrichtung bei einer beweglichen und insbesondere gefederten Abstützung an der Aufnahmevorrichtung an das zur Bearbeitung vorgesehene Werkstück heran zu bewegen, bevor ein Einsatz eines oder mehrerer der Gewindeausbildewerkzeuge erfolgt.

Um die erfindungsgemäß vorgesehene einfache Auswechselbarkeit der Vorrichtung in der Bearbeitungsanlage zu ermöglichen, ist vorzugsweise vorgesehen, dass das Gehäuse Integrationsmittel zur lösbaren Integration der Vorrichtung in einer Aufnahmevorrichtung aufweist. Die Aufnahmevorrichtung der Bearbeitungsanlage kann dazu entsprechende komplementäre Integrationsmittel umfassen.

Eine besonders einfache Auswechselbarkeit der Vorrichtung kann erreicht werden, wenn die Vorrichtung lediglich in die Aufnahmevorrichtung eingesteckt wird, was eine werkzeuglose De-/Montage der Vorrichtung ermöglicht. Dazu können die Integrationsmittel eine Auflagefläche zur Abstützung der Gewichtskraft der Vorrichtung in ihrer Betriebslage und/oder eine Anlagefläche zur Abstützung eines von dem Rotationsantrieb erzeugten Moments umfassen.

In einer bevorzugten Ausgestaltung der Vorrichtung kann vorgesehen sein, dass die Werkzeugaufnahmen (und insbesondere ihre Bewegungsachsen) in gleichmäßiger Teilung um eine Drehachse des Rotationsantriebs angeordnet sind. Dies ermöglicht eine besonders kompakte Ausgestaltung der Vorrichtung und/oder eine vorteilhafte Ausgestaltung des Getriebes, über das die Rotationsbewegung einer Abtriebswelle des Rotationsantriebs auf alle der Werkzeugaufnahmen übertragbar ist.

Erfindungsgemäß ist vorgesehen, dass der jeweilige Linearantrieb pneumatisch wirkend ausgebildet ist während der Rotationsantrieb vorzugsweise elektrisch wirkend ausgebildet sein kann. Dies ermöglicht eine besonders kompakte Ausgestaltung der Vorrichtung. Zudem ist ein elektromotorischer Rotationsantrieb kostengünstig umsetzbar und eine pneumatisch wirkende Ausgestaltung des oder der Linearantriebe zeichnet sich durch hohe Bewegungsgeschwindigkeiten und hohe erzeugbare Drucke für die Werkzeugaufnahmen und folglich die darin gehaltenen Gewindeausbildewerkzeuge aus. Dies wirkt sich positiv auf die mittels der Bearbeitungsanlage erreichbare Taktzeit aus.

Vorgesehen ist, dass die Antriebsräder drehfest mit Zylinderrohren der Werkzeugaufnahmen verbunden sind, wobei in den Zylinderrohren Kolbenstangen geführt werden, die jeweils an einem außerhalb des dazugehörigen Zylinderrohrs befindlichen Ende eine der Werkzeugaufnahmen aufweisen. Die Linearantriebe für die Werkzeugaufnahmen sind folglich in Form von pneumatischen Zylindern ausgebildet, die zudem jeweils ein Antriebsrad des die Drehbewegung übertragenden Getriebes umfassen. Diese Ausgestaltung zeichnet sich wiederum durch ihre Kompaktheit aus. Weiterhin wird dadurch die Anzahl der in der Vorrichtung verbauten Bauteile gering gehalten, was sich positiv auf die Kosten, die Montage- und Wartungsfreundlichkeit und auch auf die Verlässlichkeit der Vorrichtung auswirken kann.

Weiterhin können die Zylinderrohre der Linearantrieb dadurch in den Lastpfad für die Übertragung des von dem Rotationsantriebs erzeugten Drehmoments auf die Gewindeausbildewerkzeuge integriert werden, wozu dann noch eine drehfeste Führung der Kolbenstangen in jeweils einer Durchführung des dazugehörigen Zylinderrohrs erforderlich ist, um das Drehmoment von den Zylinderrohren auf die Kolbenstangen und die mit diesen drehfest verbundenen Werkzeugaufnahmen zu übertragen.

Die Abtriebs- und Antriebsräder des Rotationsantriebs können vorzugsweise in Form von Zahnrädern ausgebildet sein, weil diese schlupffrei die Übertragung eines hohen Moments ermöglichen. Andere Arten von Abtriebs- und Antriebsrädern, beispielsweise in Form von Reibräden, sind ebenfalls einsetzbar.

In einer weiterhin bevorzugten Ausgestaltung der erfindungsgemäßen Bearbeitungsanlage kann vorgesehen sein, dass das Gehäuse der Vorrichtung einen ersten Gehäuseteil und einen zweiten Gehäuseteil aufweist, wobei der erste Gehäuseteil und der zweite Gehäuseteil relativbeweglich miteinander verbunden sind, wobei eine Relativbewegung der Gehäuseteile zu einer Deformation eines oder mehrerer Federelemente führt. Dabei kann weiterhin bevorzugt vorgesehen sein, dass der erste Gehäuseteil die Werkzeugaufnahmen umfasst und der zweite Gehäuseteil eine Kontaktfläche für einen Kontakt eines Stempels der Bearbeitungsanlage aufweist. Bei einer solchen Vorrichtung kann vorgesehen sein, dass bei einem Bewegen der Vorrichtung mittels des Stempels der Bearbeitungsanlage an das zu bearbeitende Werkstück heran infolge einer entsprechenden Auslegung der Federsteifigkeiten eine nur geringe Deformation des oder der Federelemente erzeugt wird, während das oder die Federelemente zunehmend deformiert werden, wenn die Vorrichtung das Werkstück kontaktiert und der Stempel noch, beispielsweise toleranzbedingt, weiter verfahren wird. Die Belastungen, die der Stempel für das Bewegen der Vorrichtung an das Werkstück heran auf die Vorrichtung ausübt, werden vorzugsweise somit von dem Gehäuse aufgenommen und nicht über beispielsweise den Rotationsantrieb übertragen, wobei die federbelastete Beweglichkeit der zwei Gehäuseteile zueinander zu weite Verfahrwege des Stempels kompensiert und somit einen Schutz vor einer Überlastung des Gehäuses darstellt.

Um eine möglichst einfache Auswechselbarkeit der Vorrichtung zu erreichen, kann weiterhin bevorzugt vorgesehen sein, dass eine oder mehrere Steckverbinder zur Ausbildung von Steckverbindungen mit komplementären Gegensteckverbindern einer Energieversorgung für den Linearantrieb und/oder für den Rotationsantrieb vorgesehen sind. Dabei können die Steckverbindungen beispielsweise in der Art von Bajonettkupplungen verriegelbar ausgebildet sein. Dabei kann besonders bevorzugt vorgesehen sein, dass jeweils ein Steckverbinder für jeden der Linearantriebe und den Rotationsantrieb vorgesehen ist. Demnach würde jeder der Antriebe separat von extern mit der benötigten Energie versorgt werden. Dies kann den Vorteil mit sich bringen, dass eine Ansteuerung des jeweiligen Linearantrieb zur Nutzung eines der mehreren Gewindeausbildewerkzeuge durch eine Aktivierung der dazugehörigen Energieversorgungsleitung und folglich mittels einer zentralen Steuervorrichtung der Bearbeitungsanlage bewirkt werden kann. Auf die Integration einer entsprechenden Steuervorrichtung in die Vorrichtung selbst kann dadurch verzichtet werden, wodurch diese einfach und somit kostengünstig und zudem kompakt ausgebildet werden kann.

Die unbestimmten Artikel ("ein", "eine", "einer und "eines"), insbesondere in den

Patentansprüchen und in der die Patentansprüche allgemein erläuternden Beschreibung, sind als solche und nicht als Zahlwörter zu verstehen. Entsprechend damit konkretisierte Komponenten sind somit so zu verstehen, dass diese mindestens einmal vorhanden sind und mehrfach vorhanden sein können.

Die Erfindung wird nachfolgend anhand eines in den Zeichnungen dargestellten Ausführungsbeispiels näher erläutert. In den Zeichnungen zeigt:

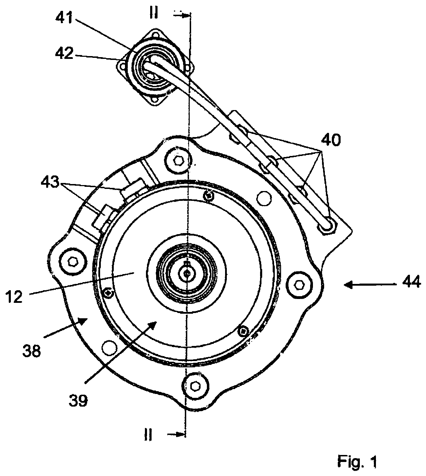

- Fig. 1:: eine Vorrichtung einer erfindungsgemäßen Bearbeitungsanlage in einer Ansicht von oben;
- Fig. 2:: die Vorrichtung in einem Längsschnitt entlang der Schnittebene II - II in der Fig. 1; und
- Fig. 3:: die die Vorrichtung gemäß den Fig. 1 und 2 umfassende Bearbeitungsanlage.

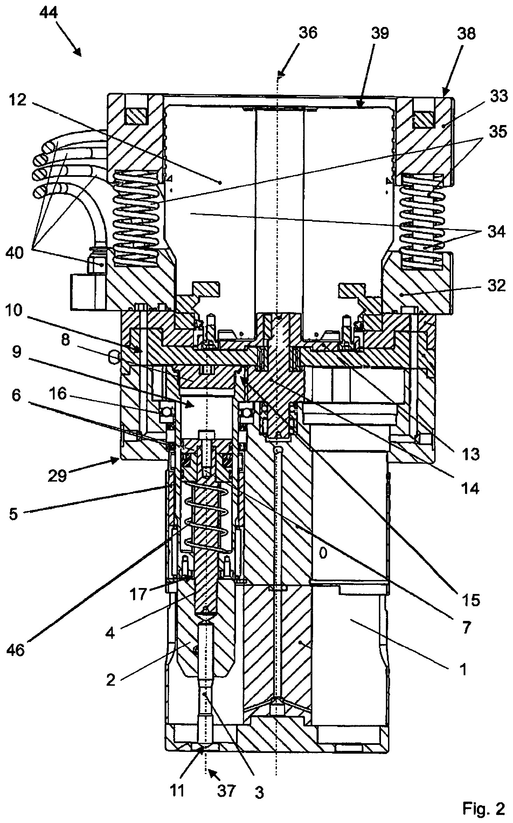

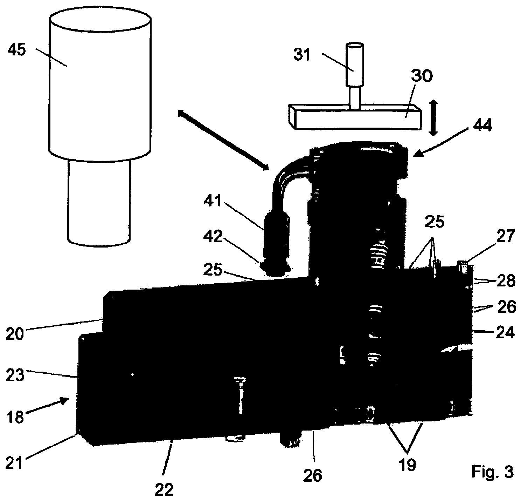

Die in den Zeichnungen dargestellte, beispielhafte Ausgestaltung einer Vorrichtung 44 zur Ausbildung eines Gewindes in einem Werkstück (nicht dargestellt) umfasst ein mehrteiliges Gehäuse, innerhalb dessen insgesamt vier Aufnahmeräume 1 für jeweils eine Werkzeugaufnahme 2 für ein Gewindeausbildewerkzeug in Form eines Gewindeformwerkzeugs 3 oder eines Gewindeschneiders, ausgebildet sind. In den Fig. 2 und 3 ist lediglich in dem einen der zwei in dem dargestellten Schnitt erkennbaren Aufnahmeräume 1 eine Werkzeugaufnahme 2 angeordnet.

Diese Werkzeugaufnahme 2, in der ein Gewindeformwerkzeug 3 gehalten ist, ist an einem Ende einer Kolbenstange 4 eines pneumatischen Linearantriebs drehfest befestigt. Dieses Ende der Kolbenstangen 4 und damit die Werkzeugaufnahme 2 sind in jeder Stellung der Kolbenstange 4 außerhalb eines Zylinderrohrs 5 des Linearantriebs angeordnet. An dem bezüglich der Werkzeugaufnahme 2 distalen Ende der Kolbenstange 4 ist ein Kolben 6 angeordnet, der abgedichtet an der Innenseite des Zylinderrohrs 5 geführt ist. Der mehrteilige Kolben 6 und die Kolbenstange 4 sind über eine Verschraubung 7 miteinander verbunden. Auf der von der Werkzeugaufnahme 2 abgewandten Seite bildet der Kolben 6 gemeinsam mit dem angrenzenden Abschnitt des Zylinderrohrs 5 und einem das Zylinderrohr 5 auf dieser Seite verschließenden Deckel 8 einen Druckraum 9 aus, der über eine dazugehörige Druckleitung 10 mit einem unter Überdruck stehenden Gas und insbesondere Druckluft befüllt werden kann wodurch der Kolben 6 mitsamt der Kolbenstange 4, der Werkzeugaufnahme 2 und dem darin gehaltenen Gewindeformwerkzeug 3 in Richtung einer Austrittsöffnung 11 des Gehäuses verfahren wird, so dass der Kopf des Gewindeformwerkzeugs 3 aus dem Gehäuse heraus bewegt wird. Ein Rückstellen des Kolbens 6 und damit des Gewindeformwerkzeug 3 erfolgt mittels eines Federelements 46. Für eine einfache Herstellbarkeit sind die Druckleitungen 10 in Form von geradlinig in dem Gehäuse verlaufenden Bohrungen ausgeführt.

Neben jeweils einem Linearantrieb für jede der vier Werkzeugaufnahmen 2 umfasst die Vorrichtung 44 noch einen Rotationsantrieb mit einem Elektromotor 12, beispielsweise in Form eines Gleichstrom-Servomotors, dessen Rotor über einen Abtriebsflansch 13 und einen zentrales Abtriebszahnrad 14 gleichzeitig alle vier Werkzeugaufnahmen 2 rotierend antreibt. Dazu greifen vier Antriebszahnräder 15, die (einstückig) in die Zylinderrohre 5 integriert sind, in das Abtriebszahnrad 14 ein, wodurch die Zylinderrohre 5, die mittels Wälzlagern 16 drehbar innerhalb des Gehäuses gelagert sind, durch den Elektromotor 12 rotierend antreibbar sind. Eine solche Rotation eines Zylinderrohrs 5 wird über die Kolbenstange 4 und die dazugehörige Werkzeugaufnahme 2 auf das entsprechende Gewindeformwerkzeug 3 übertragen und ermöglicht somit in Kombination mit einer durch den Linearantrieb bewirkten Verschiebung ein Ausbilden eines Gewindes in einem benachbart der Austrittsöffnung 11 liegenden Werkstück (Blechbauteil). Eine Übertragung eines Moments zwischen dem Zylinderrohr 5 und der Kolbenstange 4 wird durch eine ineinandergreifende Längsverzahnung der Kolbenstange 4 und einer Durchführung 17 des Zylinderrohrs 5 ermöglicht.

Ein solches Bearbeiten eines Werkstücks mittels der Vorrichtung 44 erfolgt in einer Bearbeitungsanlage, wie sie in der Fig. 3 dargestellt ist. Die Bearbeitungsanlage umfasst eine Aufnahmevorrichtung in Form eines Werkzeugbalkens 18, in den mehrere Aufnahmen 19 integriert sind, die jeweils eine Vorrichtung 44 oder eine andere Vorrichtung zur Bearbeitung des Werkstücks mit entsprechenden Integrationsmitteln aufnehmen können. Als andere Vorrichtungen zur Bearbeitung des Werkstücks kommen insbesondere Stanzvorrichtungen 45 infrage. Eine Kombination von sowohl einer oder mehreren Vorrichtungen 44 als auch von einer oder mehreren Stanzvorrichtungen 45 ermöglicht eine Bearbeitung eines Blechbauteils durch Stanzen und Gewindeformen in derselben Bearbeitungsanlage.

Der Werkzeugbalken 18 ist gabelförmig ausgebildet, umfasst somit einen ersten Balken 20 und einen zweiten Balken 21, zwischen denen ein Aufnahmeschlitz 22 für das Werkstück ausgebildet ist. Die zwei Balken 20, 21 sind dabei lediglich an einem ihrer Enden über ein Zwischenstück 23 miteinander verbunden.

Jede der Aufnahmen 19 umfasst eine Durchgangsöffnung 24 in dem ersten Balken 20, die der möglichst spielfreien Aufnahme der Außenseite eines Abschnitts des Gehäuses der Vorrichtung 44 dient. Weiterhin umfasst jede der Aufnahmen 19 eine Mehrzahl von in gleichmäßiger Teilung um die Durchgangsöffnung 24 herum angeordneten, federnd gelagerten Auflagebolzen 25. Federn 26 für die Auflagebolzen 25 sind in jeweils einer Sacklochbohrung angeordnet. Diese Sacklochbohrungen werden an ihren offenen Enden mittels eines Deckrings 28, in dem die einzelnen Auflagebolzen 25 verschiebbar geführt sind, abgedeckt. Der Deckring 28 weist zudem noch einen Vorsprung 27 auf. Bei in eine Aufnahme 19 integrierter Vorrichtung 44 (oder Stanzvorrichtung 45) liegt das Gehäuse der Vorrichtung 44 (oder Stanzvorrichtung 45) mit einer von einem ringförmigen Absatz 29 des Gehäuses ausgebildeten Auflagefläche auf den außen liegenden Stirnflächen der Auflagebolzen 25 auf, wodurch die Gewichtskraft der Vorrichtung 44 (oder Stanzvorrichtung 45) abgestützt wird. Weiterhin greift dann der Vorsprung 27 des Deckrings 28 in eine komplementäre Vertiefung (nicht dargestellt) des Gehäuses ein, wodurch ein von dem Elektromotor 12 erzeugtes Moment an dem Werkzeugbalken 18 abgestützt wird.

Zum Ausbilden eines Gewindes in einem innerhalb des Aufnahmeschlitzes 22 des Werkzeugbalkens 18 angeordneten Werkstück wird die gesamte Vorrichtung 44 zunächst mittels eines in der Fig. 3 nur schematisch angedeuteten Stempels 30 und einem dazugehörigen Antrieb 31 der Bearbeitungsanlage innerhalb der Durchgangsöffnung 24 der Aufnahme 19 und unter zunehmender Vorspannung der Federn 26 der Auflagebolzen 25 in Richtung des Werkstücks verschoben und so mit ihrem unteren Ende in Anlage an das Werkstück gebracht. Die dabei von dem Stempel 30 auf die Vorrichtung 44 übertragenen Kräfte werden von dem Gehäuse aufgenommen. Um eine Überlastung des Gehäuses und der darin integrierten Komponenten der Vorrichtung 44 zu vermeiden, wenn der Stempel 30, obwohl die Vorrichtung 44 bereits an dem Werkstück anliegt, noch etwas weiter verfahren wird, weist das Gehäuse einen ersten Gehäuseteil 32, innerhalb dessen die Werkzeugaufnahmen 2, die Linearantriebe und ein Abschnitt des Elektromotors 12 angeordnet sind, sowie einen zweiten Gehäuseteil 33 auf, der einen weiteren Abschnitt des Elektromotors 12 umgibt. Der erste Gehäuseteil 32 und der zweite Gehäuseteil 33 sind über mehrere Führungsschrauben 34 und auf diesen gehaltenen Federelementen 35 relativ zueinander beweglich verbunden. Dabei ist diese Relativbeweglichkeit entlang einer Achse möglich, die der Rotationsachse 36 des Elektromotors 12 (in etwa) entspricht. Diese Rotationsachse 36 des Elektromotors 12 ist (in etwa) koaxial zu einer Längsachse 36 der Vorrichtung 44, (in etwa) parallel zu den Bewegungsachsen 37 der Linearantriebe und koaxial oder parallel zu der Bewegungsachse des Stempels 30 angeordnet beziehungsweise ausgerichtet. Wenn die Vorrichtung 44 mittels des Stempels 30 in Richtung des Werkstücks bewegt wird, wobei der Stempel 30 auf eine ringförmige Kontaktfläche 38 des zweiten Gehäuseteils 33 drückt, sind die dafür aufzubringenden Kräfte, die im Wesentlichen der Summe der Rückstellkräfte der Federn 26 der Auflagebolzen 25 entsprechen, so gering, dass die zwischen den Gehäuseteilen 32, 33 angeordneten Federelemente 35 nur geringfügig deformiert werden. Dies ändert sich, sobald die Vorrichtung 44 in Anlage an das Werkstück kommt und der Stempel 30 weiter verfahren wird. Die dann von dem Stempel 30 auf das zweite Gehäuseteil 33 ausgeübten Kräfte führen dann zu einer weitergehenden Deformation der Federelemente 35, die dadurch ein zu weites Verfahren des Stempels 30 kompensieren und eine Überlastung des Gehäuses verhindern. Die in einem Normalbetrieb der Bearbeitungsanlage zu erwartenden maximalen Deformationen der Federelemente 35 sind kleiner als ein Überstand der Kontaktfläche 38 des Gehäuses relativ zu einer oberen Endfläche 39 des Elektromotors 12, so dass eine direkte Belastung des Elektromotors 12 durch den Stempel 30 nicht gegeben ist.

Jeder der Linearantriebe der Vorrichtung 44 ist individuell mit einer externen Druckluft- und damit Energieversorgung verbunden. Dies ermöglicht, eine Ansteuerung eines ausgewählten Linearantriebs und folglich die Nutzung des dazugehörigen Gewindeformwerkzeugs 3 zur Ausbildung eines Gewindes in dem Werkstück durch eine externe Steuerungsvorrichtung (nicht dargestellt) vornehmen zu lassen, die dazu die entsprechende Druckluftversorgung für den ausgewählten Linearantrieb freigibt. Dies ermöglicht, auf eine Integration einer entsprechenden Steuerungsvorrichtung in die Vorrichtung 44 selbst zu verzichten, wodurch diese relativ einfach im Aufbau und folglich kostengünstig ausgebildet werden kann.

Zumeist ist vorgesehen, nicht mehrere der insgesamt vier mittels der Vorrichtung 44 nutzbaren Gewindeformwerkzeuge 3, die unterschiedliche Durchmesser und/oder Gewindeformen aufweisen können, gleichzeitig einzusetzen. Vielmehr wird für ein als nächstes auszubildendes Gewinde zunächst das dazu passende Gewindeformwerkzeug 3 identifiziert, dann durch ein entsprechendes Verschieben des Werkstücks innerhalb des Aufnahmeschlitzes 22 des Werkzeugbalkens 18 die für das Gewinde vorgesehene Stelle des Werkstück unterhalb der zu dem identifizierten Gewindeformwerkzeug 3 gehörigen Austrittsöffnung 11 positioniert und daraufhin der entsprechende Linearantrieb und der Rotationsantrieb aktiviert, wodurch der Kopf des Gewindeformwerkzeugs 3 in das Material des Werkstücks eintaucht und dadurch gleichzeitig eine Öffnung und auf der Innenseite der Öffnung das vorgesehene Gewinde durch Kaltverformung des Materials einbringt. Dabei werden alle Werkzeugaufnahmen 2 und gegebenenfalls darin gehaltene Gewindeformwerkzeuge 3 mittels des Rotationsantriebs rotierend angetrieben.

Durch die vorgesehene steckbare Integration der Vorrichtung 44 in den Werkzeugbalken 18 ist die Vorrichtung 44 einfach und schnell de-/montierbar. Dies ermöglicht, den Werkzeugbalken 18 und damit die Bearbeitungsanlage bedarfsgerecht mit einer oder mehreren Vorrichtungen 44 zu bestücken. Dies kann auch in Kombination mit Stanzvorrichtungen 45 vorgesehen sein, wozu die Stanzvorrichtungen 45 entsprechende Integrationsmittel aufweisen. Die Stanzvorrichtungen 45 können dabei insbesondere so ausgebildet sein, dass die Hubbewegungen, mit denen deren Schneiden in das Werkstück getrieben werden, durch den Stempel 30 bewirkt werden.

Um eine besonders einfache De-/Montage der Vorrichtung 44 auch hinsichtlich der Anschlüsse an die externen Energieversorgungen sicherzustellen, ist vorgesehen, alle vier Pneumatikanschlüsse 40 des Gehäuses in einen Kombinationssteckverbinder 41 zu integrieren, der vier einzelne Steckverbinder für die vier Pneumatikanschlüsse 40 umfasst und lediglich mit einem komplementären Gegensteckverbinder 42 der Druckluftversorgung zusammengesteckt und beispielsweise durch eine Teildrehung um die Steckachse verriegelt werden muss. Ein Anschluss des Elektromotors 12 an eine Stromversorgung erfolgt ebenfalls durch zwei Steckverbinder 43, die mit komplementären Gegensteckverbindern (nicht dargestellt) der elektrischen Energieversorgung zusammengesteckt werden.

### Bezugszeichenliste

- 1: Aufnahmeraum
- 2: Werkzeugaufnahme
- 3: Gewindeformwerkzeug
- 4: Kolbenstange
- 5: Zylinderrohr
- 6: Kolben
- 7: Verschraubung
- 8: Deckel
- 9: Druckraum
- 10: Druckleitung
- 11: Austrittsöffnung
- 12: Elektromotor
- 13: Abtriebsflansch
- 14: Abtriebszahnrad
- 15: Antriebszahnrad
- 16: Wälzlager
- 17: Durchführung
- 18: Werkzeugbalken
- 19: Aufnahme
- 20: erster Balken
- 21: zweiter Balken
- 22: Aufnahmeschlitz
- 23: Zwischenstück
- 24: Durchgangsöffnung
- 25: Auflagebolzen
- 26: Feder
- 27: Vorsprung
- 28: Deckring
- 29: Absatz
- 30: Stempel
- 31: Antrieb
- 32: erster Gehäuseteil
- 33: zweiter Gehäuseteil
- 34: Führungsschrauben
- 35: Federelement
- 36: Rotationsachse des Elektromotors, Längsachse der Vorrichtung und Bewegungsachse des Stempels
- 37: Bewegungsachse eines Linearantriebs
- 38: Kontaktfläche
- 39: obere Endfläche des Elektromotors
- 40: Pneumatikanschluss
- 41: Steckverbinder des Pneumatikanschlusses
- 42: Gegensteckverbinder
- 43: Steckverbinder des Elektromotors
- 44: Vorrichtung
- 45: Stanzvorrichtung
- 46: Federelement

## Patentansprüche

1. Bearbeitungsanlage für ein Werkstück mit einer Vorrichtung (44) zur Ausbildung eines Gewindes in einem Werkstück und einer zur Aufnahme der Vorrichtung (44) ausgebildeten Aufnahmevorrichtung, wobei die Vorrichtung (44) ein Gehäuse und mehrere in oder an dem Gehäuse drehbar und verschiebbar gelagerte Werkzeugaufnahmen (2) für ein Gewindeausbildewerkzeug aufweist, **dadurch gekennzeichnet, dass** jeweils ein pneumatischer Linearantrieb für jede der Werkzeugaufnahmen (2) und ein Rotationsantrieb für die Werkzeugaufnahmen (2) in das Gehäuse integriert sind, wobei der Rotationsantrieb über ein zentrales Abtriebsrad jeweils ein Antriebsrad für die Werkzeugaufnahmen (2) antreibt und wobei die Antriebsräder drehfest mit Zylinderrohren (5) der Werkzeugaufnahmen (2) verbunden sind, wobei in den Zylinderrohren (5) Kolbenstangen (4) geführt sind, die jeweils an einem außerhalb des dazugehörigen Zylinderrohrs (5) befindlichen Ende eine der Werkzeugaufnahmen (2) aufweisen.

2. Bearbeitungsanlage gemäß Anspruch 1, **dadurch gekennzeichnet, dass** das Gehäuse Integrationsmittel zur lösbaren Integration der Vorrichtung (44) in die Aufnahmevorrichtung aufweist.

3. Bearbeitungsanlage gemäß Anspruch 2, **dadurch gekennzeichnet, dass** die Integrationsmittel eine Auflagefläche zur Abstützung der Gewichtskraft der Vorrichtung (44) in ihrer Betriebslage und/oder eine Anlagefläche zur Abstützung eines von dem Rotationsantrieb erzeugten Moments umfassen.

4. Bearbeitungsanlage gemäß einem der vorhergehenden Ansprüche, **dadurch gekennzeichnet, dass** die Werkzeugaufnahmen (2) in gleichmäßiger Teilung um eine Rotationsachse (36) des Rotationsantriebs angeordnet sind.

5. Bearbeitungsanlage gemäß einem der vorhergehenden Ansprüche, **dadurch gekennzeichnet, dass** der Rotationsantrieb elektrisch ausgebildet ist.

6. Bearbeitungsanlage gemäß einem der vorhergehenden Ansprüche, **dadurch gekennzeichnet, dass** die Kolbenstangen (4) jeweils drehfest in einer Durchführung (17) des dazugehörigen Zylinderrohrs (5) geführt sind.

7. Bearbeitungsanlage gemäß einem der vorhergehenden Ansprüche, **dadurch gekennzeichnet, dass** das Gehäuse einen ersten Gehäuseteil (32) und einen zweiten Gehäuseteil (32) aufweist, wobei der erste Gehäuseteil (32) und der zweite Gehäuseteil (33) relativbeweglich miteinander verbunden sind, wobei eine Relativbewegung der Gehäuseteile (32, 33) zu einer Deformation eines oder mehrerer Federelemente (35) führt.

8. Bearbeitungsanlage gemäß Anspruch 7, **dadurch gekennzeichnet, dass** der erste Gehäuseteil (32) die Werkzeugaufnahmen (2) umfasst und der zweite Gehäuseteil (33) eine Kontaktfläche (38) für einen Kontakt eines Stempels (30) der Bearbeitungsanlage aufweist.

9. Bearbeitungsanlage gemäß einem der vorhergehenden Ansprüche, **gekennzeichnet durch** einen oder mehrere Steckverbinder (41, 42) zur Ausbildung einer oder mehrerer Steckverbindungen mit einem oder mehreren Gegensteckverbindern (43) einer Energieversorgung für den Linearantrieb und/oder den Rotationsantrieb.

10. Bearbeitungsanlage gemäß Anspruch 9, **gekennzeichnet durch** jeweils einen Steckverbinder für jeden der Linearantriebe und den Rotationsantrieb.

11. Bearbeitungsanlage gemäß einem der vorhergehenden Ansprüche, **gekennzeichnet durch** einen mittels eines Antriebs (31) bewegbaren Stempel (30).

## Claims

1. Machining line for a workpiece with a device (44) for forming a thread in a workpiece and a holding device designed to hold the device (44), wherein the device (44) has a housing and several tool holders (2) rotatably and movably stored in or on the housing for a thread forming tool, **characterised in that** a pneumatic linear drive for each of the tool holders (2) and a rotational drive for the tool holders (2) are incorporated in the housing, wherein the rotational drive drives a drive wheel respectively by a central drive wheel for the tool holders (2) and wherein the drive wheels are rotatably attached to cylinder tubes (5) of the tool holders (2) wherein piston rods (4) are guided into the cylinder holes (5) which rods, in each case, have one of the tool holders (2) on one end located outside the associated cylinder tube (5).

2. Machining line according to claim 1, **characterised in that** the housing has integration means for the releasable integration of the device (44) into the holding device.

3. Machining line according to claim 2, **characterised in that** the integration means comprise a support surface to support the weight of the device (44) in its working position and/or a support surface to support a moment created by the rotating drive.

4. Machining line according to any one of the foregoing claims, **characterised in that** the tool holders (2) are arranged equally spaced about a rotational axis (36) of the rotational drive.

5. Machining line according to any one of the foregoing claims, **characterised in that** the rotational drive is electrically driven.

6. Machining line according to any one of the foregoing claims, **characterised in that** the piston rods (4) are each made to be torque-proof in a through guide (17) of the associated cylinder tube (5).

7. Machining line according to any one of the foregoing claims, **characterised in that** the housing has a first housing part (32) and a second housing part (32) wherein the first housing part (32) and the second housing part (33) are connected to move relative to one another, wherein a relative movement of the housing parts (32, 33) causes a deformation of one or more spring elements (35).

8. Machining line according to claim 7, **characterised in that** the first housing part (32) comprises the tool holders (2) and the second housing part (33) has a contact face (38) for the contact of a punch (30) of the machining line.

9. Machining line according any one of the foregoing claims, **characterised by** one or more plug connectors (41, 42) to form one or more plug connections with one or more mating connectors (43) of a power supply for the linear drive and/or for the rotational drive.

10. Machining line according to claim 9, **characterised by,** in each case, a plug connector for each of the linear drives and the rotational drive.

11. Machining line according any one of the foregoing claims, **characterised by** a punch (30), movable by means of a drive (31).

## Revendications

1. Installation d'usinage d'une pièce avec un dispositif (44) pour former un filetage dans une pièce et un dispositif de réception formé pour réceptionner le dispositif (44), le dispositif (44) présentant un boîtier et plusieurs porte-outils (2) disposés coulissants et pivotants dans ou sur le boîtier pour un outil formant un filetage, **caractérisée en ce qu'**un entraînement linéaire pneumatique pour chacun des porte-outils (2) et un entraînement rotatif pour les porte-outils (2) sont intégrés respectivement dans le boîtier, l'entraînement rotatif entraînant respectivement une roue d'entraînement pour les porte-outils (2) par une roue d'entraînement centrale et les roues d'entraînement étant assemblées solidairement en rotation à des tubes cylindriques (5) des porte-outils (2), des tiges de piston (4) étant guidées dans les tubes cylindriques (5), tiges qui présentent respectivement un des porte-outils (2) sur une extrémité située en dehors du tube cylindrique (5) afférent.

2. Installation d'usinage selon la revendication 1, **caractérisée en ce que** le boîtier présente un moyen d'intégration pour l'intégration amovible du dispositif (44) dans le dispositif de réception.

3. Installation d'usinage selon la revendication 2, **caractérisée en ce que** le moyen d'intégration comprend une surface d'appui pour soutenir le poids du dispositif (44) dans sa position de fonctionnement et/ou une surface de contact pour soutenir un couple généré par l'entraînement rotatif.

4. Installation d'usinage selon l'une des revendications précédentes, **caractérisée en ce que** les porte-outils (2) sont disposés uniformément autour d'un axe de rotation (36) de l'entraînement rotatif.

5. Installation d'usinage selon l'une des revendications précédentes, **caractérisée en ce que** l'entraînement rotatif est électrique.

6. Installation d'usinage selon l'une des revendications précédentes, **caractérisée en ce que** les tiges de piston (4) sont guidées respectivement solidairement en rotation dans une conduite (17) du tube cylindrique (5) afférent.

7. Installation d'usinage selon l'une des revendications précédentes, **caractérisée en ce que** le boîtier présente une première partie de boîtier (32) et une deuxième partie de boîtier (32), la première partie de boîtier (32) et la deuxième partie de boîtier (33) étant reliées entre elles de façon relativement mobile, un mouvement relatif des parties de boîtier (32, 33) entraînant une déformation d'un ou de plusieurs éléments de suspension (35).

8. Installation d'usinage selon la revendication 7, **caractérisée en ce que** la première partie de boîtier (32) comprend les porte-outils (2) et la deuxième partie de boîtier (33) présente une surface de contact (38) pour un contact avec un piston (30) de l'installation d'usinage.

9. Installation d'usinage selon l'une des revendications précédentes, **caractérisée par** un ou plusieurs connecteurs à fiche (41, 42) pour former une ou plusieurs connexions par connecteurs à fiches avec un ou plusieurs connecteurs homologues (43) d'une alimentation en énergie pour l'entraînement linéaire et/ou l'entraînement rotatif.

10. Installation d'usinage selon la revendication 9, **caractérisée par** un connecteur à fiche respectivement pour chacun des entraînements linéaires et l'entraînement rotatif.

11. Installation d'usinage selon l'une des revendications précédentes, **caractérisée par** un piston (30) mobile au moyen d'un entraînement (31).
